**Europäisches Patentamt**

**European Patent Office**

**Office européen des brevets**

(19)

(11) Veröffentlichungsnummer: **0 288 708 B1**

(12)

# EUROPÄISCHE PATENTSCHRIFT

(45) Veröffentlichungstag der Patentschrift: **30.10.91**

(51) Int. Cl.⁵: **A01K 1/06, A01K 5/01**

(21) Anmeldenummer: **88103992.9**

(22) Anmeldetag: **14.03.88**

(54) **Anbindevorrichtung für Rindvieh.**

(30) Priorität: **01.04.87 CH 1246/87**

(43) Veröffentlichungstag der Anmeldung:
**02.11.88 Patentblatt 88/44**

(45) Bekanntmachung des Hinweises auf die
Patenterteilung:
**30.10.91 Patentblatt 91/44**

(84) Benannte Vertragsstaaten:
**AT BE CH DE FR GB IT LI NL SE**

(56) Entgegenhaltungen:
**DE-A- 1 607 109**
**US-A- 1 337 926**
**US-A- 2 221 046**

(73) Patentinhaber: **JG FARMTECHNIK**
**Luzernerstrasse 90**
**CH-6330 Cham(CH)**

(72) Erfinder: **Gisler, Josef**
**Luzernerstrasse 90**
**CH-6330 Cham(CH)**

(74) Vertreter: **Kägi, Otto**
**Patentanwalt Hinterbergstrasse 36 Postfach**
**CH-6330 Cham(CH)**

## Beschreibung

Die Erfindung betrifft eine Anbindevorrichtung für Rindvieh gemäss dem Oberbegriff des Anspruches 1.

Vorrichtungen dieser Art werden zur Ausrüstung von Viehställen verwendet, um jedes Tier an seinem zugewiesenen Platz vor der Futterkrippe anzubinden, wobei die Tiere in Buchten, z. B. in Zweiergruppen, voneinander getrennt gehalten werden. Teils aus Gründen einer tiergerechten Viehhaltung, teils im Hinblick auf einen rationellen Stallbetrieb werden an solche Anbindevorrichtungen mancherlei und ganz verschiedenartige Anforderungen gestellt. Bekannte Ausführungen von derartigen Stallausrüstungen sind wohl jeweils für einzelne Gegebenheiten tauglich, jedoch an unterschiedliche Tierarten oder wechselnde Betriebsbedingungen wenig anpassungsfähig, vor allem was die Unterteilung der durchgehenden Krippe zur Verhinderung gegenseitiger Futterentnahme oder die für unterschiedliche Tiere verschiedene, zweckmässige Lage des Begrenzungsrohres anbelangt.

Eine Anbindevorrichtung der genannten Gattung kann zwecks Längsunterteilung der Krippe mit vertikalen Platten ausgerüstet werden (US-A-2 221 046). Diese Platten sind am horizontalen Begrenzungsrohr gelenkig befestigt und können in einer Vertikalebene aus der Krippe heraus nach oben geschwenkt werden. Diese Anordnung setzt eine bestimmte Höhenlage des Begrenzungsrohrs voraus, und ausserdem können die Platten nur einzeln betätigt werden, was bei einer grösseren Zahl umständlich ist, wenn die Krippe, z.B. zwecks Reinigung, durchgehend freigegeben werden soll.

Aufgabe der vorliegenden Erfindung ist die Schaffung einer anpassungsfähigen, den genannten wechselnden Anforderungen gerecht werdenden Viehanbindevorrichtung der eingangs genannten Art, welche vor allem auch stufenweise modular ausbaubar ist; insbesondere soll bei Bedarf eine voll wirksame Abschottung des Futtertroges zwischen den einzelnen Buchten möglich sein, ohne dass indessen die durchgehende, bequeme Reinigung des Troges behindert wird.

Diese Aufgabe wird erfindungsgemäss dadurch gelöst, dass der krippenseitige Stützpfosten an seinem oberen Ende mit in der Pfostenachse zugänglichen Führungen für die Aufnahme des Krippen-Trennorgans ausgebildet ist.

Dank einer derartigen Gestaltung der Anbindevorrichtung lassen sich, ausgehend von einer relativ einfachen und preiswerten Grundausrüstung, überraschend vielgestaltige Ausbaustufen und -Varianten verwirklichen, die praktisch sämtliche sich bei verschiedenen Anlagen oder bei wechselnden Betriebsverhältnissen ergebenden Bedürfnisse befriedigen können. In den Ansprüchen 2 bis 18 sind bevorzugte Ausführungsformen insbesondere hinsichtlich der Krippentrennung und des Stützpfostens zur Gestaltung verschiedener Ausbauvarianten angegeben.

Nachstehend werden Ausführungsbeispiele der erfindungsgemässen Anbindevorrichtung in verschiedenen Ausbauvarianten in Verbindung mit der Zeichnung näher erläutert. Es zeigen (jeweils in Richtung der durchgehenden Futterkrippe gesehen):

Fig. 1    die Grundausrüstung mit Tiertrennbügel und Begrenzungsrohr,

Fig. 2    die Vorrichtung nach Fig. 1 ergänzt mit einem festen Krippentrennbügel,

Fig. 3    eine weitere Ausbauvariante mit schwenkbarem Krippentrennbügel,

Fig. 4    eine Variante zu Fig. 3, bei welcher der schwenkbare Krippentrennbügel durch eine Abschottungsplatte ergänzt ist, und

Fig. 5    eine weitere Ausführungsform mit schwenkbarem sowie hebund senkbarem Krippentrennbügel.

In allen Figuren sind jeweils gleiche Teile mit gleichen Bezugszahlen bezeichnet.

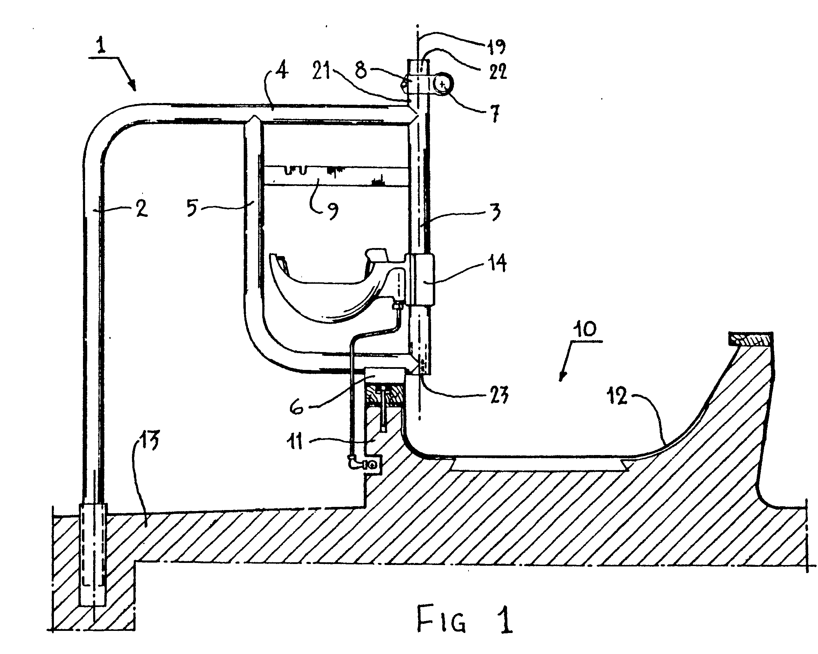

In Fig. 1 ist die Grundausrüstung einer Anbindevorrichtung mit Tiertrennbügel 1 und Begrenzungsrohr 7 dargestellt. Der Tiertrennbügel 1 (auch "Grundbock" genannt) besteht im wesentlichen aus einem ersten Rohrbogen mit den Schenkeln 2, 4, einem zweiten Rohrbogen 5 und einem auf der Seite der durchgehenden Futterkrippe 10 befindlichen, vertikalen Stützpfosten 3. Die genannten Teile sowie ein Anbindesteg 9 des Tiertrennbügels sind miteinander fest verschweisst. Der Tiertrennbügel 1 (sowie je nach Bedarf weitere, in gleichen Abständen angeordnete Bügel) ist zur Futterkrippe 10 querstehend über der Liegefläche 13 des Stalles verankert, und zwar einerseits mit dem senkrecht stehenden Schenkel 2 und anderseits mittels einem am Rohrbogen 5 festgeschweissten Ankersockel 6, welcher auf der vorderen Krippenwand 11 aufliegt. Wie ersichtlich, ist der Ankersockel 6 gegenüber dem krippenseitigen Stützpfosten 3 versetzt, und der Tiertrennbügel 1 ist insgesamt in einer solchen Lage verankert, dass der genannte Stützpfosten 3 bezüglich der vorderen Krippenwand 11 etwas zum Futtertrog 12 hin verschoben ist. Dadurch liegt der Stützpfosten, welcher vorzugsweise als gerades, durchgehendes Rohr ausgebildet ist, unten und oben frei. Das obere und das untere Rohrende bilden auf diese Weise Führungen 22 bzw. 23, welche in Richtung der Pfosten-Achse 19 zugänglich sind. Wie weiter unten erläutert, dienen diese Führungen zur wahlweisen Aufnahme eines Trennorgans im Bereich der Futterkrippe 10.

Der Stützpfosten 3 dient zur wahlweisen Aufnahme von ergänzenden Teilen der Stallausrüstung, wie beispielsweise ein Tränkebecken 14. Zweckmässigerweise ist der Stützpfosten über den die obere Begrenzung des Tiertrennbügels bildenden Rohrschenkel 4 hinaus verlängert, und an dieser Verlängerung 21 kann das horizontale Begrenzungsrohr 7 mittels einer Rohrschelle 8 auf geeigneter Höhe befestigt werden. Das Begrenzungsrohr 7 läuft längs der Futterkrippe und verbindet über jeweils eine Schelle 8 die einzelnen Tiertrennbügel 1 untereinander. Die Tiere, welche an den Tiertrennbügeln 1 einzeln oder in Zweiergruppen jeweils beidseits des Bügels angebunden sind, werden durch das Begrenzungsrohr 7 daran gehindert, gegen die Futterkrippe vorzutreten oder mit ausholenden Kopfbewegungen Gras und Heu umherzuschleudern.

Wie anhand der nachfolgenden Figuren gezeigt wird, bietet die vorstehend anhand der Fig. 1 beschriebene, wenig aufwendige Grundausrüstung einer Anbindevorrichtung die Voraussetzungen für eine weitere Ausrüstung je nach Bedarf, wobei ein modularer Ausbau der Grundausrüstung unter weitgehender Wiederverwendung von gleichen oder ähnlichen Teilen möglich ist. Es können dabei die Buchten alle gleich oder unterschiedlich je nach Anforderungen, insbesondere bezüglich Krippentrennung und Lage des Begrenzungsrohrs (horizontal und vertikal) ausgestattet werden.

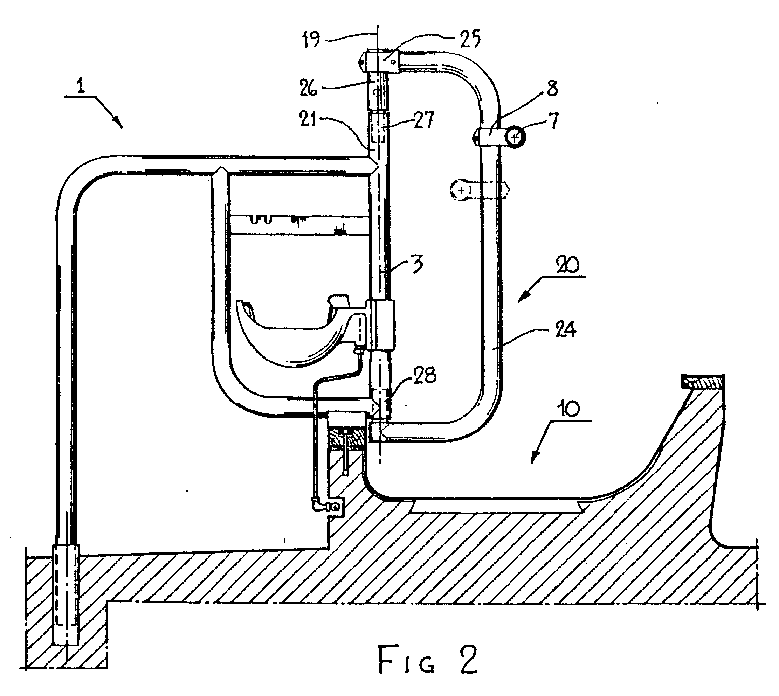

Eine erste solche Ausbauvariante ist in Fig. 2 dargestellt. Bei dieser ist der Tiertrennbügel 1 (in gleicher Ausführung wie nach Fig. 1) durch einen festen Krippentrennbügel 20 ergänzt. Dieser besteht im wesentlichen aus einem Rohrbogen 24 und einem Rohrstück 26, welches mittels einer Klemmschelle 25 am Rohrbogen 24 einstellbar gehalten ist. Das untere Ende des Rohrbogens 24 weist einen festen Zapfen 28 und das Rohrstück 26 einen Zapfen 27 auf, welche von unten bzw. oben in die offenen Enden des Stützpfostens 3 mit den Führungen 22 und 23 (Fig. 1) eingreifen. Das Begrenzungsrohr 7 ist hier mittels der Schelle 8 am Bügel 24 befestigt, wodurch (bei analoger Befestigung des Rohres 7 an benachbarten Anbindevorrichtungen oder an einem Endpfosten oder dgl.) der Krippentrennbügel in seiner Lage über der Futterkrippe 10 festgehalten wird. Wie angedeutet, kann die Schelle 8 bzw. das Rohr 7 auf verschiedener Höhe wie auch wahlweise auf der Aussen- oder Innenseite am Rohrbogen 24 festgeklemmt werden. Somit bietet die Variante nach Fig. 2 die Möglichkeit, mit einfachsten Mitteln gegenseitige Störungen oder Verletzungen der Tiere im Krippenbereich zu verhindern und das Begrenzungsrohr in jeweils optimaler Lage zu befestigen.

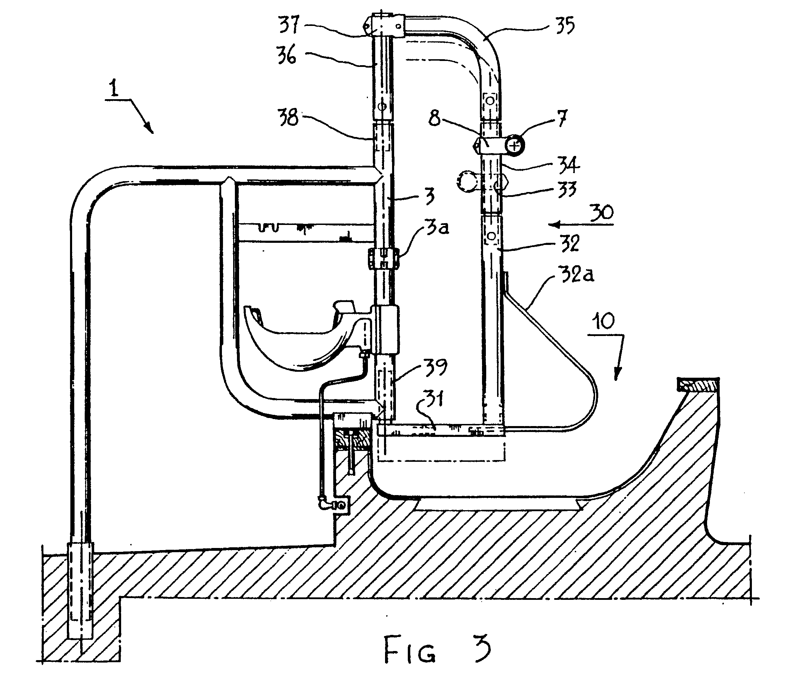

Die Variante mit dem etwas anders gestalteten Krippentrennbügel 30 nach Fig. 3 bietet erweiterte Einstellmöglichkeiten für den Bügel und erlaubt das seitliche Schwenken desselben zwecks leichterer Reinigung des Krippenbereichs. Der Krippentrennbügel 30 setzt sich zusammen aus einer unteren Traverse 31 (vorzugsweise ein Vierkantrohr), einem geraden Rohrstück 32, einem Rohrbogen 35, ·einer die Teile 32 und 35 fest verbindenden Stange 33, und einem in einer Klemmschelle 37 einstellbar gehaltenen Rohrstück 36, wobei das Rohrstück 36 und die Traverse 31 je mit einem koaxialen Zapfen 38 bzw. 39 versehen sind. Aehnlich wie bei Fig. 2 greifen die Zapfen 38 und 39 in die offenen Rohrenden des Pfostens 3 ein, jedoch sind hier das Rohrstück 36 und der untere Zapfen 39 etwas länger. Dies ermöglicht, durch Lösen der Klemmschelle 37 den Krippentrennbügel 30 (der mit einem Zusatzbügel 32a ergänzt sein kann) auf verschiedene Höhen einzustellen, wie mit strichpunktierten Linien angedeutet ist. Ausserdem ist das Begrenzungsrohr 7 mit der Schelle 8 nicht starr auf dem Bügel festgeklemmt, sondern auf einem Rohrstück 34, welches auf dem Stangenabschnitt 33 drehbar ist. Dadurch ist es möglich, den Krippentrennbügel 30 nach beiden Seiten um den Stützpfosten 3 zu schwenken, wobei die Zapfen 38 und 39 sich in den Pfostenführungen drehen. Indem alle gleichartigen, durch das Begrenzungsrohr 7 verbundenen Krippentrennbügel sich in Längsrichtung an die vordere Krippenwand anlegen, wird die Krippe zur bequemen Reinigung freigegeben. Auf der drehbaren, vertikalen Hülse 34 kann das Begrenzungsrohr 7 auch bei dieser Ausführung wie angedeutet in verschiedenen Lagen befestigt werden, jedoch ist natürlich auch eine Montage mit der Schelle 8 direkt am Stützpfosten 3 möglich. Am Stützpfosten 3 ist hier ausserdem eine Anbindearmatur 3a für Gruppenauslösung angebracht, welche dazu dient, die beiden links und rechts des Tiertrennbügels 1 stehenden Tiere gleichzeitig losbinden zu können.

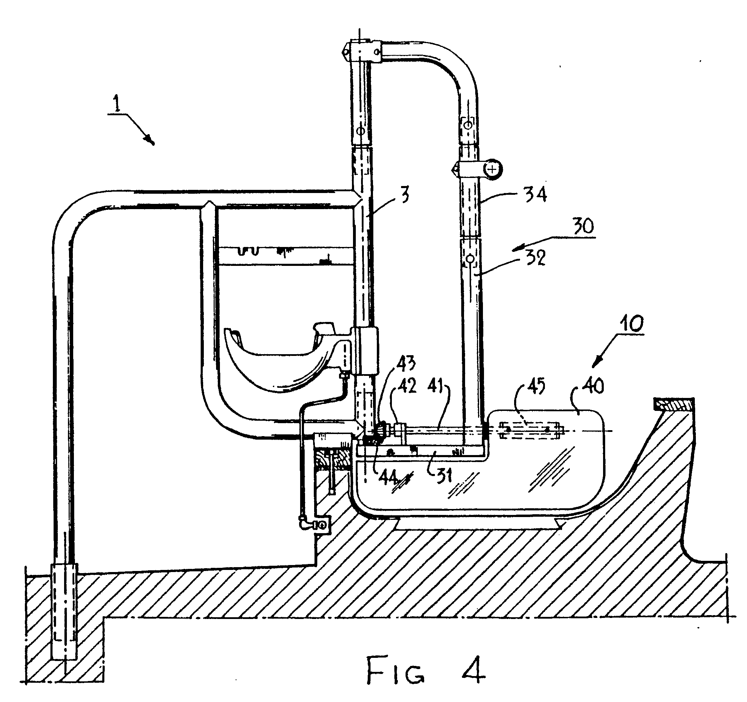

Die weitere Ausbauvariante nach Fig. 4 verwendet im wesentlichen den gleichen Krippentrennbügel 30 wie nach Fig. 3, jedoch ergänzt mit einer Abschottungsplatte 40, welche den Futtertrog praktisch in seinem gesamten Querschnitt trennt. Eine solche vollständige Abschottung ist wichtig, um eine strenge Einzelfütterung der Tiere zu gewährleisten, insbesondere bei individueller und dosierter Verabreichung von Kurzfutter oder hochwertigem Kraftfut ter. Eine solche bis auf den Grund des Futtertroges reichende Abschottung würde indessen das seitliche Schwenken des Krippentrennbügels bei noch mit Futterresten belegtem Trog behindern. Um jedoch das Schwenken der Bügel und damit die durchgehende bequeme Reinigung der Krippe dennoch zu ermöglichen, ist die Abschottungseinrichtung wie folgt ausgeführt:

Die Abschottungsplatte 40 ist bei 45 an einer horizontalen Achse 41 befestigt, welche im Rohrstück 32 sowie in einem Lagerbock 42 drehbar gelagert ist. An ihrem dem Stützpfosten 3 benachbarten Ende trägt die Drehachse 41 ein Kegelrad 43, welches mit einem Kegelrad-Segment 44 kämmt, welches seinerseits am unteren Ende des Stützpfostens 3 befestigt ist. Die Teile 43, 44 bilden somit ein Getriebe, welches bewirkt, dass beim Schwenken des Krippentrennbügels 30 die horizontale Achse 41 selbsttätig gedreht und damit die Abschottungsplatte 40 hochgeschwenkt wird. Zweckmässigerweise wird das Getriebe 43, 44 mit dem Uebersetzungsverhältnis 2:1 ausgeführt, so dass nach einer 90°-Schwenkung des Bügels 30 die Abschottungsplatte 40 um 180° hochgeklappt ist, dann also vertikal über der Achse 41 steht. Selbstverständlich lässt sich diese zwangsweise gekoppelte Bewegung auch mit einem anders ausgeführten Getriebe erreichen, welches die Drehachse 41 mit einem feststehenden Teil der Anlage verbindet.

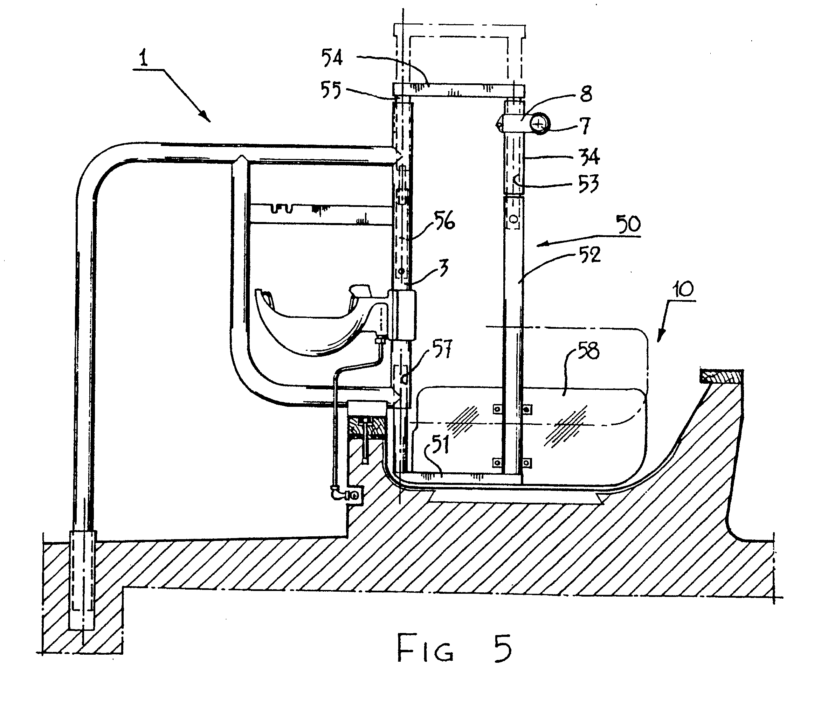

Beim Ausführungsbeispiel nach Fig. 5 wird eine vollständige Abschottung des Futtertroges mit der Möglichkeit einer Freigabe der Krippe ebenfalls, jedoch mit etwas anderen Mitteln erreicht. Der rechteckige bzw. C-förmige Krippentrennbügel 50 setzt sich zusammen aus unterer Traverse 51, geradem Rohrstück 52, Stangenabschnitt 53 und oberer Traverse 54, wobei letztere einen Zapfen 55 und die untere Traverse 51 einen hierzu koaxialen Zapfen 57 trägt. Die beiden Zapfen 55 und 57 greifen drehbar sowie axial verschiebbar in die entsprechenden Führungen am Stützpfosten 3 ein. In gleicher Weise wie bei den Ausführungsformen nach Fig. 3 und 4 ist die Begrenzungsstange 7 mittels der Klemmbride 8 auf dem über dem Stangenabschnitt 53 drehbaren Rohrstück 34 montiert. Dadurch ist auch hier das gleichzeitige Ausschwenken mehrerer durch das Begrenzungsrohr 7 verbundener Krippentrennbügel 50 möglich.

Am Krippentrennbügel 50 ist im unteren Bereich eine Abschottungsplatte 58 fest angebracht. Indem der Abstand zwischen unterer Traverse 51 und oberer Traverse 54 grösser ist als die Höhe des Stützpfostens 3, lässt sich der Krippentrennbügel 50 samt Abschottungsplatte und Begrenzungsstange 7 heben und senken; die obere Endlage ist mit strichpunktierten Linien angegeben. Zum bequemen Anheben und Absenken des Krippentrennbügels 50 (gegebenenfalls mehrere solcher Bügel gleichzeitig) dient ein zweckmässigerweise im Innern des Stützpfosten-Rohres 3 eingebautes, pneumatisch oder hydraulisch betriebenes Zylinder/Kolben-Aggregat 56, dessen Zylinder am Stützpfosten 3 verankert ist und dessen Kolbenstange auf den oberen Zapfen 55 einwirkt. Wird also der Krippentrennbügel 50 mit Hilfe des Aggregats 56 angehoben, so weist die Abschottungsplatte 58 einen ausreichenden Abstand zum Boden des Futtertroges auf, und der Trennbügel samt Abschottungsplatte lässt sich dann leicht zur Seite schwenken.

## Patentansprüche

1. Anbindevorrichtung für Rindvieh, mit mindestens einem quer zu einer durchgehenden Futterkrippe (10) über einer Liegefläche (13) zu verankernden Tiertrennbügel (1), welcher einen krippenseitigen Stützpfosten (3) zur wahlweisen Aufnahme von ergänzenden Ausrüstungsteilen aufweist, einem längs zur Krippe verlaufenden, die Tiertrennbügel verbindenden Begrenzungsrohr (7), sowie einem Krippen-Trennorgan (20, 30, 50), wobei der Tiertrennbügel (1) bezüglich der Krippe (10) so verankert ist, dass der krippenseitige Stützpfosten (3) gegenüber der vorderen Krippenwand (11) zum Futtertrog (12) hin versetzt ist, dadurch **gekennzeichnet,** dass der genannte Stützpfosten (3) an seinem oberen und unteren Ende mit in der Pfostenachse (19) zugänglichen Führungen (22, 23) für die Aufnahme des Krippen-Trennorgans (20, 30, 50) ausgebildet ist.

2. Anbindevorrichtung nach Anspruch 1, dadurch gekennzeichnet, dass der krippenseitige Stützpfosten (3) eine die obere Begrenzung (4) des Tiertrennbügels (1) überragende Verlängerung (21) aufweist.

3. Anbindevorrichtung nach Anspruch 1 oder 2, dadurch gekennzeichnet, dass der krippenseitige Stützpfosten (3) als an beiden Enden offenes Rohr ausgebildet ist.

4. Anbindevorrichtung nach einem der vorangehenden Ansprüche, dadurch gekennzeichnet, dass der Tiertrennbügel (1) einen gegenüber dem krippenseitigen Stützpfosten (3) versetzten Ankersockel (6) zur Auflage auf der vorderen Krippenwand (11) aufweist.

5. Anbindevorrichtung nach Anspruch 1, gekennzeichnet durch einen Krippentrennbügel (20, 30, 50), welcher mit zwei koaxialen Zapfen (27, 28; 38, 39; 55,57) versehen ist, die von oben bzw. unten in die Führungen (22, 23) des genannten Stützpfostens (3) eingreifen.

6. Anbindevorrichtung nach Anspruch 5, dadurch gekennzeichnet, dass einer der Zapfen (27, 38) in einem Rohrstück (26, 36) befestigt ist, welches einstellbar in einer Klemmschelle (25, 37) gehalten ist.

7. Anbindevorrichtung nach Anspruch 5, dadurch gekennzeichnet, dass der Krippentrennbügel (30, 50) mit seinen Zapfen (38, 39; 55, 57) in den Führungen (22, 23) schwenkbar ist.

8. Anbindevorrichtung nach Anspruch 5, dadurch gekennzeichnet, dass der Krippentrennbügel (50) mit seinen Zapfen (55, 57) in den Führungen (22, 23) heb- und senkbar ist.

9. Anbindevorrichtung nach Anspruch 8, dadurch gekennzeichnet, dass zum Heben und Senken eine zwischen dem Krippentrennbügel (50) und dem Tiertrennbügel (1) angreifende Zylinder/Kolben-Einheit (56) vorgesehen ist.

10. Anbindevorrichtung nach Anspruch 9, dadurch gekennzeichnet, dass die Zylinder/Kolben-Einheit (56) im genannten Stützpfosten (3) eingebaut ist.

11. Anbindevorrichtung nach Anspruch 6, dadurch gekennzeichnet, dass der Krippentrennbügel (30) durch Lösen der Klemmschelle (37) höheneinstellbar ist.

12. Anbindevorrichtung nach Anspruch 7 oder 8, dadurch gekennzeichnet, dass der Krippentrennbügel (30, 50) mit einer den Futtertrog (12) unterteilenden Abschottungsplatte (40, 58) versehen ist.

13. Anbindevorrichtung nach Anspruch 12, dadurch gekennzeichnet, dass die Abschottungsplatte (40) an einer am Krippentrennbügel (30) drehbar gelagerten, horizontalen Achse (41) befestigt ist.

14. Anbindevorrichtung nach Anspruch 13, dadurch gekennzeichnet, dass die Achse (41) über ein Getriebe (43, 44) mit einem feststehenden Vorrichtungsteil gekoppelt ist, um beim Schwenken des Krippentrennbügels (30) ein gleichzeitiges Schwenken der Abschottungsplatte (40) mit der horizontalen Achse (41) zu bewirken.

15. Anbindevorrichtung nach Anspruch 14, dadurch gekennzeichnet, dass das Getriebe ein Kegelradgetriebe (43, 44) mit dem Uebersetzungsverhältnis 2:1 ist, dessen einer Teil (44) am Stützpfosten (3) befestigt ist.

16. Anbindevorrichtung nach Anspruch 12, dadurch gekennzeichnet, dass die Abschottungsplatte (58) mit dem heb- und senkbaren Krippentrennbügel (50) fest verbunden ist.

17. Anbindevorrichtung nach Anspruch 5, dadurch gekennzeichnet, dass das mit Klemmschellen (8) versehene Begrenzungsrohr (7) wahlweise am genannten Stützpfosten (3) oder am Krippentrennbügel (20, 30, 50) montierbar ist.

18. Anbindevorrichtung nach Anspruch 7, dadurch gekennzeichnet, dass der Krippentrennbügel (30, 50) eine drehbare, vertikale Hülse (34) für die Aufnahme einer das Begrenzungsrohr (7) tragenden Klemmschelle (8) aufweist.

**Claims**

1. Tying device for cattle, having at least one animal-separating frame (1) which is to be anchored transversely to a continuous feed crib (10) above a resting surface (13) and has a crib-side supporting post (3) for alternatively accommodating supplementary parts of equipment, a limit tube (7) which runs along the crib and connects the animal-separating frames, and also a crib-separating member (20, 30, 50), the animal-separating frame (1) being anchored with regard to the crib (10) in such a way that the crib-side supporting post (3) is offset relative to the front crib wall (11) towards the feed trough (12), characterised in that the said supporting post (3) is formed at its top and bottom end with guides (22, 23), accessible in the post axis (19), for accommodating the crib-separating member (20, 30, 50).

2. Tying device according to Claim 1, characterised in that the crib-side supporting post (3) has an extension (21) projecting above the top limit (4) of the animal-separating frame (1).

3. Tying device according to Claim 1 or 2, characterised in that the crib-side supporting post (3) is designed as a tube open at both ends.

4. Tying device according to one of the preceding claims, characterised in that the animal-separating frame (1) has an anchoring base (6), offset relative to the crib-side supporting post (3), for resting on the front crib wall (11).

5. Tying device according to Claim 1, characterised by a crib-separating frame (20, 30, 50) which is provided with two coaxial pins (27, 28; 38, 39; 55, 57) which engage from above and respectively below in the guides (22, 23) of the said supporting post (3).

6. Tying device according to Claim 5, characterised in that one of the pins (27, 38) is fastened in a tube piece (26, 36) which is adjustably held in a clamping collar (25, 37).

7. Tying device according to Claim 5, characterised in that the crib-separating frame (30, 50) can be pivoted with its pins (38, 39; 55, 57) in the guides (22, 23).

8. Tying device according to Claim 5, characterised in that the crib-separating frame (50) can be lifted and lowered with its pins (55, 57) in the guides (22, 23).

9. Tying device according to Claim 8, characterised in that a cylinder/piston unit (56) acting between the crib-separating frame (50) and the animal-separating frame (1) is provided for the lifting and lowering.

10. Tying device according to Claim 9, characterised in that the cylinder/piston unit (56) is installed in the said supporting post (3).

11. Tying device according to Claim 6, characterised in that the crib-separating frame (30) can be vertically adjusted by loosening the clamping collar (37).

12. Tying device according to Claim 7 or 8, characterised in that the crib-separating frame (30, 50) is provided with a partition plate (40, 58) subdividing the feed trough (12).

13. Tying device according to Claim 12, characterised in that the partition plate (40) is fastened to a horizontal spindle (41) rotatably mounted on the crib-separating frame (30).

14. Tying device according to Claim 13, characterised in that the spindle (41) is coupled via a gear unit (43, 44) to a fixed part of the device in order to effect a simultaneous pivoting of the partition plate (40) with the horizontal spindle (41) when the crib-separating frame (30) is pivoted.

15. Tying device according to Claim 14, characterised in that the gear unit is a bevel gear unit (43, 44) having the transmission ratio 2:1, one part (44) of which is fastened to the supporting post (3).

16. Tying device according to Claim 12, characterised in that the partition plate (58) is firmly connected to the liftable and lowerable crib-separating frame (50).

17. Tying device according to Claim 5, characterised in that the limit tube (7) provided with clamping collars (8) can alternatively be mounted on the said supporting post (3) or on the crib-separating frame (20, 30, 50).

18. Tying device according to Claim 7, characterised in that the crib-separating frame (30, 50) has a rotatable, vertical sleeve (34) for accommodating a clamping collar (8) carrying the limit tube (7).

## Revendications

1. Dispositif d'attache pour bovins, comportant au moins un arceau de séparation des animaux (1), à ancrer perpendiculairement à une mangeoire continue (10) au-dessus d'une surface de couchage (13) et présentant côté mangeoire un poteau de soutien (3) destiné à recevoir au choix des éléments complémentaires d'équipement, un tube de délimitation (7) s'étendant dans le sens longitudinal de la mangeoire et assemblant les arceaux de séparation des animaux, ainsi qu'un organe de séparation de mangeoire (20, 30, 50), l'arceau de séparation des animaux (1) étant ancré par rapport à la mangeoire (10) de telle sorte que le poteau de soutien (3) côté mangeoire est décalé vers l'auge à fourrage (12) par rapport à la paroi avant (11) de la mangeoire, **caractérisé** en ce que le poteau de soutien (3) précité est configuré à son extrémité supérieure et à son extrémité inférieure en guidages (22, 23), accessibles dans l'axe (19) du poteau et destinés à recevoir l'organe de séparation de mangeoire (20, 30, 50).

2. Dispositif d'attache selon la revendication 1, caractérisé en ce que le poteau de soutien (3) côté mangeoire présente un prolongement (21) dépassant la délimitation supérieure (4) de l'arceau de séparation des animaux (1).

3. Dispositif d'attache selon la revendication 1 ou 2, caractérisé en ce que le poteau de soutien (3) côté mangeoire est réalisé en forme de tube ouvert aux deux extrémités.

4. Dispositif d'attache selon l'une des revendications précédentes, caractérisé en ce que l'arceau de séparation des animaux (1) présente un socle d'ancrage (6), à poser sur la paroi avant (11) de la mangeoire, qui est décalé par rapport au poteau de soutien (3).

5. Dispositif d'attache selon la revendication 1, caractérisé par un arceau de séparation de mangeoire (20, 30, 50) qui est muni de deux pivots coaxiaux (27,28; 38,39; 55,57), qui s'engagent respectivement par le haut et par le bas dans les guidages (22,23) du poteau de soutien (3) précité.

6. Dispositif d'attache selon la revendication 5, caractérisé en ce qu'un des pivots (27, 38) est fixé dans un élément tubulaire (26, 36), qui est maintenu avec possibilité de réglage dans un collier de serrage (25, 37).

7. Dispositif d'attache selon la revendication 5, caractérisé en ce que l'arceau de séparation de mangeoire (30, 50) peut être pivoté, par ses pivots (38,39; 55,57), dans les guidages (22,23).

8. Dispositif d'attache selon la revendication 5, caractérisé en ce que l'arceau de séparation de mangeoire (50) peut être relevé et abaissé, par ses pivots (55, 57), dans les guidages (22,23).

9. Dispositif d'attache selon la revendication 8, caractérisé en ce qu'une unité cylindre/piston (56), agissant entre l'arceau de séparation de mangeoire (50) et l'arceau de séparation des animaux (1), est prévue pour le relevage et l'abaissement.

10. Dispositif d'attache selon la revendication 9, caractérisé en ce que l'unité cylindre/piston (56) est incorporée dans le poteau de soutien (3) précité.

11. Dispositif d'attache selon la revendication 6, caractérisé en ce que l'arceau de séparation de mangeoire (30) peut être réglé en hauteur en desserrant le collier de serrage (37).

12. Dispositif d'attache selon la revendication 7 ou 8, caractérisé en ce que l'arceau de séparation de mangeoire (30, 50) est muni d'un panneau de cloisonnement (40, 58) compartimentant l'auge à fourrage (12).

13. Dispositif d'attache selon la revendication 12, caractérisé en ce que le panneau de cloisonnement (40) est fixé à un axe horizontal (41), monté rotatif sur l'arceau de séparation de mangeoire (30).

14. Dispositif d'attache selon la revendication 13, caractérisé en ce que l'axe (41) est accouplé par un mécanisme de transmission (43, 44) à une partie fixe du dispositif, afin de produire, lors du pivotement de l'arceau de séparation de mangeoire (30), un pivotement simultané du panneau de cloisonnement (40) à l'aide de l'axe horizontal (41).

15. Dispositif d'attache selon la revendication 14, caractérisé en ce que le mécanisme de transmission est un engrenage à roues coniques (43, 44) de rapport de démultiplication 2:1, dont un élément (44) est fixé au poteau de soutien (3).

16. Dispositif d'attache selon la revendication 12, caractérisé en ce que le panneau de cloisonnement (58) est assemblé rigidement à l'arceau de séparation de mangeoire relevable et abaissable (50).

17. Dispositif d'attache selon la revendication 5, caractérisé en ce que le tube de délimitation (7), muni de colliers de serrage (8), peut être monté au choix sur le poteau de soutien (3) précité ou sur l'arceau de séparation de mangeoire (20, 30, 50).

18. Dispositif d'attache selon la revendication 7, caractérisé en ce que l'arceau de séparation de mangeoire (30, 50) présente un manchon vertical rotatif (34) pour recevoir un collier de serrage (8) portant le tube de délimitation (7).

FIG 1

Fig 3

FIG 4

FIG 5

EP 0 288 708 B1